(19) Europäisches Patentamt
European Patent Office
Office européen des brevets

(11) Publication number: **0 061 872**
**B1**

(12) # EUROPEAN PATENT SPECIFICATION

(45) Date of publication of patent specification: **07.08.85**

(21) Application number: **82301397.4**

(22) Date of filing: **18.03.82**

(51) Int. Cl.[4]: **C 07 F 9/09**, C 07 F 9/10, C 07 F 9/58, A 61 K 31/685 // A01N57/10

(54) **Ethyleneglycol derivatives, their production and use.**

(30) Priority: **30.03.81 JP 48287/81**
**19.02.82 JP 26692/82**

(43) Date of publication of application:
**06.10.82 Bulletin 82/40**

(45) Publication of the grant of the patent:
**07.08.85 Bulletin 85/32**

(84) Designated Contracting States:
**BE CH DE FR GB IT LI NL SE**

(56) References cited:
**EP-A-0 040 039**
**DE-A-2 619 686**
**DE-A-2 642 661**

**CHEMICAL ABSTRACTS, vol. 83, no. 21, 24th November 1975, page 335, no. 175989v, Columbus Ohio (USA); W.J. BAUMANN et al.: "Substrate specificity of enol ether formation in rat brain. Metabolism of O-alkyl ethanediol phosphorylethanolamine".**

(73) Proprietor: **Takeda Chemical Industries, Ltd.**
**27, Doshomachi 2-chome Higashi-ku**
**Osaka-shi Osaka, 541 (JP)**

(72) Inventor: **Hozumi, Motoo**
**7-6, Higashiomiya 3-chome**
**Omiya Saitama 330 (JP)**
Inventor: **Nomura, Hiroaki**
**9-15, Higashikanmaki 3-chome**
**Takatsuki Osaka 569 (JP)**
Inventor: **Yoshioka, Yoshio**
**25-14, Takatsukadai 1-chome Kawai-cho**
**Kitakatsuragi-gun Nara 636 (JP)**

(74) Representative: **Laredo, Jack Joseph et al**
**Elkington and Fife High Holborn House 52/54**
**High Holborn**
**London, WC1V 6SH (GB)**

**EP 0 061 872 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to certain ethyleneglycol derivatives which are active as antitumor agents and to their production and use.

DE—A1—2642661 describes the separation of alkyl- and acylphospholipids. The compounds of the following formula:

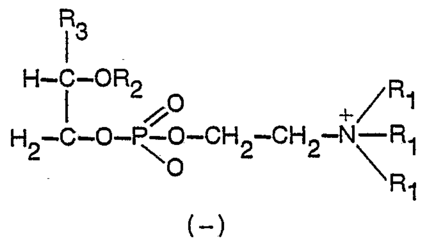

in which $R_1$ may be H or $C_{1-4}$ alkyl, $R_2$ is $C_{8-22}$ alkyl or a radical of an aliphatic or aromatic acid, and $R_3$ is H or $—CH_2—OR_2$, are made by the hydrolysis of an acetoindialkyl-phosphoric acid ester of the formula:

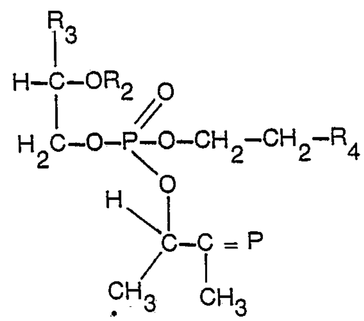

in which $R_4$ is halogen or $N(R_1)_3$ and $R_1$, $R_2$ and $R_3$ are as just indicated. Where $R_4$ is halogen, the hydrolysis is carried out in the presence of an amine $N(R_1)_3$, and the amino groups are optionally quaternised into the corresponding phosphatidyl choline compound by means of the usual alkylating agents. In a particular example, acetoinendiol-cyclophosphoric acid-β-bromoethylester is reacted with 1-hexadecyl-ethylene glycol ether, and the residue is treated with ethanolic trimethylamine to form 1-0-hexadecylethyleneglycol-2-phosphoryl-choline.

W. J. Baumann and his co-workers report, in connection with the substrate specificity of enolether formation in the rat brain, on the metabolism of O-alkylethanediol phosphorylethanolamine (BIOCHEM. BIOPHYS, RES. COMMUN. 1975, 66(2), 717—24). In particular, Baumann et al report that 1-0-hexadecyl ethanediol 2-phosphorylethanolamine-1-$^{14}C$ metabolises in the myelinating rat brain by oxidative ether bond cleavage. Dehydrogenation to diol plasmalogen did not occur, thus providing further evidence for the high degree of substrate specificity of the 1-0-alkyl 2-acyl *sn*-glycero-3-phosphorylethanolamine desaturase present in the brain (see Chemical Abstracts, Vol. 83, No. 21, 24th November 1955, page 335, No. 175989*v*, Columbus Ohio, U.S.A.).

DE—A1—2619686 is concerned with anti-tumour agents, specifically with such agents containing lysolecithin-type compounds in the usual pharmaceutical preparations.

These compounds are of the formula:

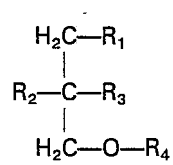

in which $R_1$ is alkyl carbonyl or alkoxy of $C_8—C_{20}$, preferably $C_{16}—C_{18}$, chain length; $R_2$ is H or $CH_3$; $R_3$ is H, OH, alkylcarbonyl or alkoxy of $C_1—C_8$, preferably $C_1—C_3$, chain length, or benzyl, and $R_4$ represents

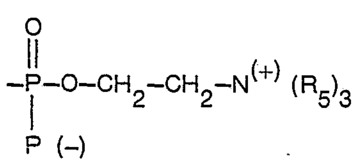

(phosphorylcholine derivatives, wherein $R_5$ represents H or $C_1-C_3$ alkyl, preferably $CH_3$)

or

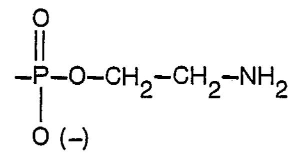

(phosphorylethanolamine)

In the formulae just described $R_1$ and $R_3$ are interchangeable, the long chain-substituted $R_1$ being an α-lysolecithin analogue and the long chain substituted $R_3$ being a β-lysolecithin analogue.

The applicants Max-Planck-Gesellschaft zur Förderung der Wissenschaften e.V. discovered unexpectedly that the lysolecithin analogues of the formula given above had a particular effect on the growth of tumours and were therefore effective in pharmaceutical preparations as antitumour agents for parenteral or oral administration.

An example of a compound satisfying the latter general formula which was found particularly effective had the following formula:

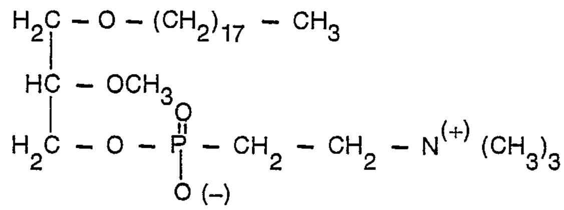

The analogous compounds in which the methoxy group constituting the substituent $R_3$ was replaced by hydroxyl or hydrogen were similarly effective.

This invention consists in a compound of formula (I), inclusive of its salts with hydrochloric, hydrobromic, or hydroiodic acid or with alkali metal or alkaline earth metal hydroxide, for use in inhibiting multiplication of tumour cells and prolonging the survival time of a tumor-bearing warm-blooded animal:

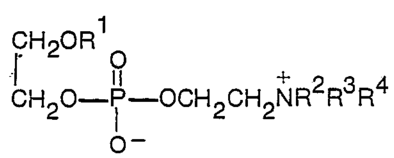

(I)

wherein $R^1$ is $C_{8-26}$ alkyl or $C_{8-26}$ alkenyl, each of said groups being unsubstituted or substituted by oxo, $C_{3-7}$ cycloalkyl or phenyl, or $R^1$ is 12-(2,3-cyclopentenyl)dodecyl, 12-(2,3-cyclopentenyl)-5-dodecenyl, 3,7-dimethyl-9-(2,6,6-trimethyl-1-cyclohexen-1-yl)-2,4,6,8-nonatetraenyl, 15-(4-n-butylphenoxy)pentadecyl, ω-(p-tolyl) heptadecyl or 6-(4-n-pentylphenoxy)hexadecyl, and $R^2$, $R^3$ and $R^4$ are each hydrogen or $C_{1-5}$ alkyl which is unsubstituted or substituted by hydroxycarbonyl, $C_{1-3}$ alkoxycarbonyl, hydroxy, cyano or $C_{1-3}$ alkoxy, or $—\overset{+}{N}R^2R^3R^4$ represents pyridinio, oxazolio, thiazolio, pyridazinio, quinolinio or isoquinolinio, each of said groups being unsubstituted or substituted by $C_{1-4}$ alkyl, hydroxy, hydroxyethyl, carbamoyl or ureido, or represents $\overset{+}{N}—C_{1-4}$ alkyl-morpholinio or $\overset{+}{N}—C_{1-4}$alkyl-piperazino.

The invention also consists in a compound, inclusive of its salts with hydrochloride, hydrobromide, hydroidide, alkali metal or alkaline earth metal hydroxide of the formula (I′):

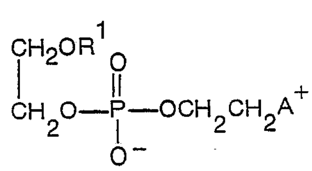

(I′)

wherein $R^1$ is $C_{8-26}$ alkyl or $C_{8-26}$ alkenyl, each of said groups being unsubstituted or substituted by oxo, $C_{3-7}$ cycloalkyl or phenyl, or $R^1$ is 12-(2,3-cyclopentenyl)dodecyl, 12-(2,3-cyclopentenyl)-5-dodecenyl, 3,7-dimethyl -9-(2,6,6-trimethyl-1-cyclohexen-1-yl)-2,4,6,8-nonatetraenyl, 15-(4-n-butylphenoxy)pentadecyl, ω-(p-tolyl)heptadecyl or 6-(4-n-pentylphenoxy)hexadecyl, and $A^+$ represents pyridinio, oxazolio, thiazolio, pyridazinio, quinolinio or isoquinolinio, each of said groups being unsubstituted or substituted by $C_{1-4}$ alkyl, hydroxy, hydroxyethyl, carbamoyl or ureido, or represents $\overset{+}{N}$—$C_{1-4}$alkyl-morpholinio or $\overset{+}{N}$—$C_{1-4}$-alkyl piperazinio.

The invention also consists in a compound, inclusive of its salts with hydrochloride, hydrobromic or hydroiodic acid or with alkali metal or alkaline earth metal hydroxide, of the formula (I''):

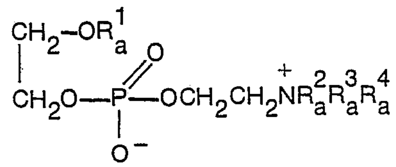

(I'')

wherein $R^1_a$ is $C_{10-15}$ alkyl or $C_{10-15}$ alkenyl, each of said groups being unsubstituted or substituted by oxo, $C_{3-7}$ cycloalkyl or phenyl, and
$R^2_a$, $R^3_a$ and $R^4_a$ are each hydrogen or $C_{1-5}$ alkyl, which may be unsubstituted or substituted by hydroxycarbonyl, $C_{1-3}$ alkoxycarbonyl, hydroxy, cyano or $C_{1-3}$ alkoxy.

Referring to the above formula (I), $C_{8-26}$ alkenyl may be straight-chain or branched, and the alkenyl may have a Z- or E-configuration. As stated above R may be unsubstituted or substituted by oxo, $C_{3-7}$ cycloalkyl or phenyl. $R^1$ includes, for example, $C_{10-20}$ alkyl, e.g. n-dodecyl, n-tridecyl, n-tetradecyl, 3,7,11-trimethyltetradecyl, n-pentadecyl, n-heptadecyl, n-octadecyl, n-eicosanyl, n-docosanyl, dihydrophythyl; $C_{10-20}$ alkenyl, e.g. 8-tridecenyl ($\Delta^8$), 3,7,11-trimethyl-2,6,10-dodecatrienyl, 8-tetradecenyl ($\Delta^8$), 8,11-tetradecadienyl ($\Delta^{8,11}$), 8-heptadecenyl ($\Delta^8$), 1-heptadecenyl ($\Delta^1$), 8,11,14-heptadecatrienyl ($\Delta^{8,11,14}$), 8,11-octadecadienyl ($\Delta^{8,11}$), 4,7,10,13-nonadecatetraenyl ($\Delta^{4,7,10,13}$), phytyl, 12-(2,3-cyclopentenyl)dodecyl, 12-(2,3-cyclopentenyl)-5-dodecenyl, 3,7-dimethyl-9-(2,6,6-trimethyl-1-cyclohexen-1-yl)-2,4,6,8-nonatetraenyl; 15-(4-n-butylphenoxy)-pentadecyl, ω-(p-tolyl)heptadecyl or 6-(4-n-pentylphenoxy)-hexadecyl.

$R^2$, $R^3$ and $R^4$ may each be hydrogen or $C_{1-5}$ alkyl (e.g. methyl, ethyl, propyl, i-propyl). The $C_{1-5}$ alkyl groups may be unsubstituted or substituted by hydroxycarbonyl, ($C_{1-3}$) alkoxycarbonyl, hydroxyl, cyano or ($C_{1-3}$) alkoxy. Alternatively, the cyclic ammonium group $—\overset{+}{N}R^2R^3R^4$ may be pyridinio, oxazolio, thiazolio, pyridazinio, quinolinio or isoquinolinio, each of which may be unsubstituted or substituted by $C_{1-4}$ alkyl (e.g. methyl or ethyl), hydroxy, hydroxyethyl, carbamoyl or ureido.

The cyclic ammonium group $—\overset{+}{N}R^2R^3R^4$ may include the case in which two of $R^2$, $R^3$ and $R^4$ form a morpholine or piperazine ring with the quaternary nitrogen atom with the remaining member being $C_{1-4}$ alkyl (e.g. methyl, ethyl), namely $\overset{+}{N}$—$C_{1-4}$ alkyl-morpholinio or $\overset{+}{N}$—$C_{1-4}$alkyl-piperazinio, e.g. $\overset{+}{N}$-methylmorpholinio or $\overset{+}{N}$-methylpiperazinio.

The compound (I) may exist in the form of:

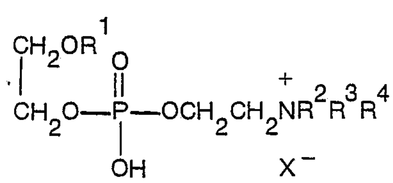

(Ia)

wherein $X^-$ is an anion of Cl, Br or I, or in the form of:

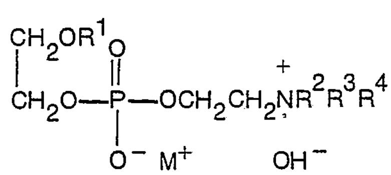

(Ib)

wherein $M^+$ is an alkali metal (e.g. Na, K) ion. The compound (I) can also form a salt with an alkaline earth metal (e.g. Ca, Mg) ion.

Among the compounds (I), the compounds represented by the formula (I'):

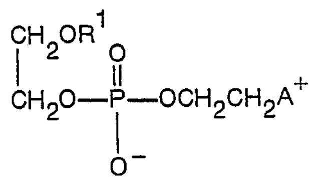

(I')

wherein $R^1$ is as defined above; $A^+$ is as defined above, and the compounds represented by the formula (I''):

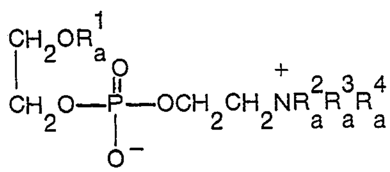

(I'')

wherein $R_a^1$ is $C_{10-15}$ alkyl or $C_{10-15}$ alkenyl which may be unsubstituted or substituted by oxo, $C_{3-7}$ cycloalkyl or phenyl; $R_a^2$, $R_a^3$ and $R_a^4$ are each hydrogen or $C_{1-5}$ alkyl, which may be unsubstituted or substituted as defined above, are novel compounds which are especially suited for the purposes of this invention.

According to a preferred aspect of the invention, $R^1$ is $C_{10-15}$ alkyl or $C_{10-15}$ alkenyl and $R^2$, $R^3$ and $R^4$ are each hydrogen or $C_{1-5}$ alkyl, which may be unsubstituted or substituted by hydrooxycarbonyl, $C_{1-3}$ alkoxycarbonyl, hydroxyl, cyano or $C_{1-3}$ alkoxyl.

The compound (I) is preferably administered by injection at a dose level of 0.1 to 100 mg per kilogram body weight daily.

In the compound (I') defined above $R^1$ is preferably $C_{10-20}$ alkyl or $C_{10-20}$ alkenyl.

Alternatively, $A^+$ is preferably pyridinio, oxazolio, thiazolio, pyridazinio, quinolinio or isoquinolinio.

One particularly preferred compound (I') is 2-octadecyloxyethyl 2-pyridinioethyl phosphate.

In the compound (I'') defined above $R_a^1$ is preferably $C_{10-15}$ alkyl, $R_a^2$, $R_a^3$ and $R_a^4$ are each preferably unsubstituted $C_{1-5}$ alkyl.

In the alternative, $R_a^2$ may be $C_{1-5}$ alkyl which is substituted by $C_{1-3}$ alkoxy- or hydroxycarbonyl, and $R_a^3$ and $R_a^4$ are each unsubstituted $C_{1-5}$ alkyl.

Particularly preferred compound (I'') are 2-tetradecyloxyethyl 2-trimethylammonioethyl phosphate and 2-tetradecyloxyethyl 2-[N,N-dimethyl-N-(3-methoxycarbonylpropyl)]ammonioethyl phosphate.

The compound (I) can be produced for example by the following processes.

Process A

A compound of formula (II):

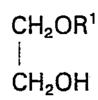

(II)

wherein $R^1$ is as defined above, is reacted with a compound of formula (III):

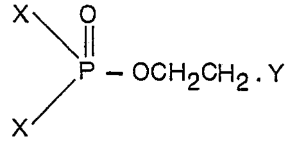

(III)

wherein X and Y are each halogen (e.g. Cl, Br or I), to give a compound of formula (IV):

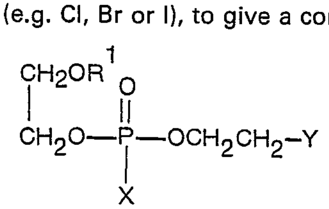

(IV)

wherein $R^1$, X and Y are as defined above, which is then reacted with water to give a compound of formula (V):

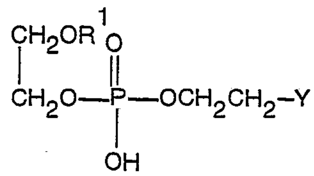

(V)

wherein $R^1$ and Y are as defined above. This compound (V) is reacted with a compound of formula (VI):

$NR^2R^3R^4$ (VI)

wherein all symbols are as defined above, to give the desired compound (I).

In the above process, the compound (II) can be prepard by the known methods, e.g. the method described by Abe Y. and Watanabe S. in Kogyo Kagaku Zasshi (J. Industrial Chemistry of Japan), *66*, 1842—1844 (1963) or by A. N. Wrigley et al in J. Org. Chem., *25*, 439 (1960).

Where any two or all of $R^2$, $R^3$ are hydrogen, the following process *B* can also be employed.

Process B

A compound (II) is reacted with a compound of formula (III'):

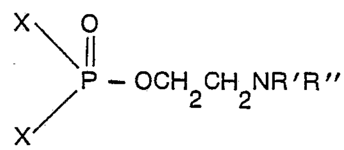

(III')

wherein X is as defined above; either R' or R" is $—COOCH_2—C_6H_5$, $—COOC_6H_5$, —CHO, $—COCF_3$, $—COCH_2C_6H_5$, $—SiMe_3$ or $—C(C_6H_5)_3$ and the other is hydrogen, or R' and R" are cyclized to form succinimido or phthalimido and the reaction product is further treated with water and, then, deprotected in the *per se* conventional manner to yield a compound (I) which may be represented by the formula (I'''):

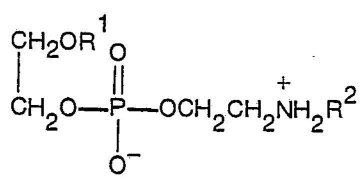

(I''')

wherein $R^1$ and $R^2$ are as defined above.

Process C

A compound of formula (II) is reacted with a phosphorylating agent to give a compound of formula (VII):

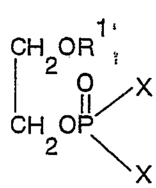

(VII)

wherein $R^1$ and X are as defined above, which is then reacted with a compound of formula (VIII):

$HOCH_2CH_2NR'R''$ (VIII)

wherein R′ and R″ are as defined above, or a compound of formula (IX):

$$HOCH_2CH_2Z \qquad (IX)$$

wherein Z is Y or $-\overset{+}{N}R^2R^3R^4$. to give a compound of formula (V) or (I). The compound (V) can be converted to a compound (I) by the process described hereinbefore. Further, when $R^2$, $R^3$ or/and $R^4$ in formula (I) have ester or cyano as a substituent, it can be converted to the corresponding carboxylic acid of (I) by hydrolysis, as required.

The present invention covers accordingly, in a preferred aspect thereof, a process for producing a compound (I′) or (I″), inclusive of the specified salts thereof, as defined above, characterized by:

(a) reacting a compound of the formula (V):

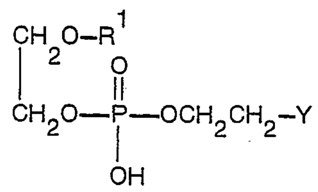

(V)

wherein $R^1$ is as defined above in connection with (I″) or is $R^1$ as also defined above in connection with (I′) and Y is halogen, with a compound of the formula (A):

A

wherein A is as defined above in connection with (I′), or with a compound of the formula:

$$NR^2_aR^3_aR^4_a$$

wherein $R^2_a$, $R^3_a$ and $R^4_a$ are as defined in connection with (I″), and, if necessary, the reaction followed by treatment with water; or

(b) reacting a compound of the formula (VII′):

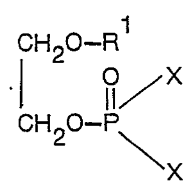

(VII′)

wherein $R^1$ is as defined above in connection with (I″), and X is halogen, with a compound of the formula (X):

$$HOCH_2CH_2A'^{+}X^{-} \qquad (X)$$

wherein A′ is pyridinio, oxazolio, thiazolio, pyridazinio, quinolinio or isoquinolinio each of said groups being unsubstituted or substituted $C_{1-4}$ alkyl, carbamoyl or ureido and $X^-$ is the anion of Cl, Br, or I, or with a compound of the formula (XI):

$$HOCH_2CH_2\overset{+}{N}R^2_aR^3_aR^4_a \qquad (XI)$$
$$X^-$$

wherein $R^2_a$, $R^3_a$ and $R^4_a$ and $X^-$ are as defined above in connection with (I″), or with a compound of the formula (VIII):

$$HOCH_2CH_2NR'R'' \qquad (VIII)$$

wherein one of R′ and R″ is $R^2_a$ as defined above in connection with (I″) and another is $-COOCH_2C_6H_5$,

$-COOC_6H_5$, $-CHO$, $-COCF_3$, $-COCH_2C_6H_5$, $-SiMe_3$ or $-C(C_6H_5)_3$, or R′ and R″ are cyclized with the adjacent N atom to form succinimido or phthalimido, the reaction being followed by treatment with water and removal of the protective group, or

(c) reacting a compound of the formula (XII):

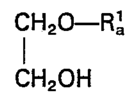

(XII)

wherein $R_a^1$ is as defined above in connection with (I″), with a compound of the formula (III′):

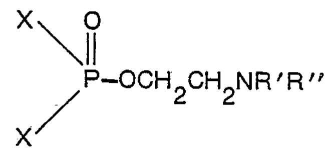

(III′)

wherein X, R′ and R″ are as defined above, and, if necessary the reaction being followed by treatment with water, and

(d) if desired, converting the thus obtained compound (I′) or (I″) as defined above into a salt thereof as specified above by the addition of the corresponding acid or alkali.

The compound (I), inclusive of salts thereof, which is active component of the antitumor agent according to this invention has growth inhibiting and cell differentiation (decarcinogenesis) inducing activities against tumor cells (e.g. mouse spontaneous leukemia cells MI, Rauscher virus-induced mouse leukemia cells, human myelogenous leukemia cells HL–60). It also shows antitumor activity in *in vivo* tumor systems where the rate of tumor growth is relatively low.

In addition to the cytocidal and cell differentiation inducing actions, the compound has host-mediated antitumor activity such as macrophage activation. Specifically, when administered to animals bearing spontaneous carcinomas, carcinogen-induced solid tumors, MM46 derived from carcinoma, Ehrlich carcinoma or sacroma 180, or to nude mice implanted with human cancer cells, the compound displays life-span prolonging effects.

The compound (I) is of relatively low toxicity and has generally low hemolytic activity. Thus, in a hemolysis test (human erythrocytes) by the method of Gottfried et al [J. Lipid Research, *4*, 57 (1963)], the 50% hemolytic concentration of the compound according to Production Example 2, for instance, was found to be 80 µg/ml (in the presence of 5% human albumin). In these compounds (I), the influence of the length of chain $R^1$ varies with the other moiety of the molecule. Generally, Compound (I) having $C_{16-19}$ as $R^1$ exhibits a strong cytocidal activity, while one having $C_{12-15}$ exhibits strong activity in cell differentiation and a strong host-mediated antitumor activity such as immunoenhancement is achieved by the $C_{19-26}$ compound, and a still greater decrease of hemolysis is obtained when $R^1$ contains a double bond or $-\overset{+}{N}R^2R^3R^4$ is for example pyridinio.

The antitumor agent according to this invention displays excellent life-span prolonging effects in warm-blooded animals with leukemia, solid tumors (e.g. digestive tract cancer or cancer of the lung) and other malignant tumors. The compound (I) is generally available as a crystalline powder or powder and since it is sufficiently hydrophilic and lipophilic, the antitumor compound can be formulated into variety of pharmaceutical compositions such as injections, tablets, capsules, solutions or ointments for oral or parenteral administration.

Injectable solutions and solutions for drip infusion, for instance, can be prepared in the conventional manner using physiological saline or an aqueous vehicle containing glucose and/or other auxiliaries. Tablets and capsules can also be prepared by the established pharmaceutical procedures. These preparations may take unit dosage forms for application by the routes of administration suited for the purposes, e.g. intravenous or subcutaneous preparations or preparations for direct injection at an effected area in the case of injectable solutions. The dosage for tumor-bearing warm-blooded animals is selected according to the clinical condition, route of administration, and may generally range from 0.1 to 100 mg/kg body weight or preferably from 0.5 to 30 mg/kg body weight. The frequency of administration may be daily or at intervals of 2 to 7 days. For a sustained effective tissue concentration, the regimen of 1 to 3 divided doses daily or a drip infusion over a protracted time may also be feasible.

The present invention accordingly also covers a pharmaceutical composition for inhibiting the multiplication of tumor cells and prolonging the survival time of tumor-bearing warm-blooded animal which contains an effective amount of a compound (I), inclusive of the specified salts thereof, as defined above.

The compound (I) according to this invention has antifungal or antimycotic activity. Its antimycotic spectrum covers *Trichophyton, Crytococcus neoformans* and yeasts and, therefore, the compound is of

value in the treatment and prevention of diseases (e.g. trichophytia) of which these organisms are causative agents.

Such an antimycotic preparation can be produced by the established pharmaceutical procedure and while the relative amount of the active compound in the preparation is not particularly critical, it may range from 0.01 to 70 weight %, or preferably 0.1 to 5 weight % of the total composition when the preparation is intended for the treatment of trichophytia for instance. Such an antimycotic preparation can be conveniently applied in the conventional manner, e.g. by direct coating or spraying to the affected site once to several times daily.

The compound (I) is also active against phytopathogenic pests, especially fungi and, therefore, is useful as an agricultural fungicide for combating such plant diseases as rice blast, rice Helminthosporium leaf spot, rice stem rot, gray mold and cucumber anthracnose. Agricultural fungicides containing the compound (I) can be prepared in the conventional manner. The proper content of the active compound (I) is generally 1—90% for emulsifiable concentrates and wettable powders, and 0.1—10% for oil solutions and dusts, and 5—50% for granular preparations. Emulsifiable concentrates and wettable powders are preferably sprayed after adequate dilution with water (e.g. 50—5,000-fold dilution). These agricultural fungicides can be applied in the conventional manner and generally in a proportion of 10 to 300 g as the active compound to each 10 ares of land. The concentration of the active component in such fungicidal preparations is 10 to 1000 ppm.

The compound (I) of this invention is only sparingly active against bacteria in general and yet is active against protozoa (e.g. *Tetrahymena pyri.* W.), which activity in association with the aforesaid antimycotic activity thereof makes the compound (I) of value as an antimycotic/antiprotozoal agent for the assay of bacterial ecologies in the soil, activated sludge or body fluids. Thus, for example, in isolating useful bacteria from the soil, or in detecting the activity of bacteria alone to the exclusion of protozoa and fungi for operation or analysis of the activated sludge process in waste water treatment, selective growth of bacteria is possible without allowing fungi and protozoa present in the sample to grow. Specifically, the test sample is added to a liquid or solid culture medium, then 0.1 ml of an aqueous solution of the compound (I) having a concentration of 10 µg/ml to 100 mg/ml is added, and incubation is performed.

The following production, test, working and dosage form examples are further illustrative of this invention.

Production Example 1

2-Tetradecyloxyethyl 2-trimethylammonioethyl phosphate

In benzene were dissolved 12 g of 2-tetradecyloxyethanol and 18 g of 2-bromoethyl phosphorodichloridate, and following dropwise addition of 5.9 g of pyridine under ice-cooling, the mixture was stirred at room temperature for 3 hours. The benzene was distilled off, water was added and the solution refluxed for 1 hour and 30 minutes. After cooling, the reaction mixture was extracted with ether and the extract was concentrated to dryness. The residue was dissolved in 20% trimethylamine-toluene and heated in a sealed tube at 60°C for 2 days. After completion of the reaction, the solvent was replaced with methanol, 16.6 g of silver carbonate was added thereto, and the mixture was refluxed. The hot mixture was filtered and the filtrate was concentrated to dryness to give a crude product, which was purified by column chromatography using silica gel (developing solvent: first MeOH; second, $CHCl_3$–MeOH–$H_2O$) and recrystallized from chloroform-acetone to give 9.4 g (48%) of the desired product as a white powder.

Infrared absorption spectrum (KBr) $cm^{-1}$:

3400, 2920, 2850, 1630, 1460, 1220, 1130, 1090, 1060.

Elemental analysis

Calcd. for $C_{21}H_{46}NO_5P \cdot 1.5H_2O$:

C, 55.98; H, 10.96; N, 3.11; P, 6.88

Found:

C, 56.28; H, 11.52; N, 3.46; P, 7.02

Production Example 2

2-Tridecyloxyethyl 2-trimethylammonioethyl phosphate

In benzene were dissolved 3.8 g of 2-n-tridecyloxyethanol and 5.7 g of 2-bromoethyl phosphorodichloridate, and following dropwise addition of 1.85 g of pyridine under ice-cooling, the mixture was stirred at room temperature. The reaction mixture was treated by the procedure of Production Example 1 including hydrolysis, quaternization, dehalogenation, purification by silica gel column chromatography and recrystallization from chloroform-acetone to give 2.2 g (34%) of the desired product. It was hygroscopic.

Elemental analysis

Calcd. for $C_{20}H_{44}NO_5P \cdot 0.5H_2O$:

C, 57.39; H, 10.83; N, 3.35; P, 7.40

Found:

C, 57.61; H, 11.17; N, 3.68; P, 7.25

Production Example 3

2-Oleyloxyethyl 2-trimethylammonioethyl phosphate

In benzene were dissolved 4.0 g of 2-[(Z)-9-octadecen-1-yl)oxyethanol and 4.6 g of 2-bromoethyl phosphorodichloridate, and following dropwise addition of 1.5 g of pyridine under ice-cooling, the mixture was stirred at room temperature. The reaction mixture was treated by the procedure of Production Example 1 including hydrolysis, quaternization, purification by silica gel column chromatography and recrystallization from chloroform-acetone to give 0.52 g (9%) of the desired product.

Elemental analysis

Calcd. for $C_{25}H_{52}NO_5P \cdot H_2O$:

C, 60.58; H, 10.98; N, 2.83; P, 6.25

Found:

C, 60.59; H, 11.28; N, 3.07; P, 6.31

Production Example 4

2-Dodecyloxyethyl 2-trimethylammonioethyl phosphate

In 31 ml of benzene was dissolved 4.2 g (18.23 mmol) of 2-dodecyloxyethanol, and following addition of 6.62 g of 2-bromoethyl phosphorodichloridate and 2.1 g of pyridine, the mixture was stirred at room temperature. The reaction mixture was concentrated to dryness under reduced pressure, water was added to the residue, and the mixture was refluxed. After cooling, 5 ml of conc. hydrochloric acid was added, extraction was carried out with ether, and the ether layer was concentrated to dryness. The residue was dissolved in 20% $NMe_3$-toluene (g/g) and stirred at room temperature. The reaction mixture was concentrated to dryness under reduced pressure, the residue was dissolved in methanol, and 4.2 g of $Ag_2CO_3$ was added thereto. The mixture was stirred vigorously, the insoluble matter was filtered off, and the mother liquor was concentrated to dryness under reduced pressure. The residue was purified by silica gel column chromatography [eluent: MeOH and $CHCl_3$–MeOH–$H_2O$ (65:25:2)] to give the desired product as colorless crystals.

TLC [silica gel, $CHCl_3$–MeOH–$H_2O$ (65:25:4)]

Single spot, Rf = 0.13

Infrared absorption spectrum (film) $cm^{-1}$:

3390, 2930, 2850, 1650, 1480, 1240, 1080, 1060, 960, 920, 785 (sh), 755

Elemental analysis

Calcd. for $C_{19}H_{40}NO_5P \cdot \frac{1}{2}H_2O$:

C, 56.69; H, 10.27; N, 3.48; P, 7.70

Found:

C, 56.61; H, 10.57; N, 3.55; P, 7.63

Production Example 5

2-Tetradecyloxyethyl 2-aminoethyl phosphate

In benzene was dissolved 1.6 g of 2-tetradecyloxyethanol, and following addition of 2.48 g of 2-phthalimidoethyl phosphorodichloridate and 0.636 g of pyridine, the mixture was stirred at room temperature. The reaction mixture was concentrated to dryness under reduced pressure, the resulting residue was dissolved in 70% pyridine and the solution was heated at 70°C for 30 minutes. The pyridine was distilled off under reduced pressure, followed by addition of water, conc. hydrochloric acid and ether to the residue. The mixture was stirred vigorously, and the ether layer was taken and concentrated to dryness under reduced pressure. The residue was dissolved in methanol, 1.5 g of hydrazine hydrate was added and the mixture was refluxed. The insoluble matter was filtered off and the filtrate was concentrated to dryness under reduced pressure. The residue was purified by silica gel column chromatography and recrystallized from methanol to give a colorless crystalline powder (1.7 g).

TLC [silica gel, $CHCl_3$-MeO-$H_2O$ (65:25:4)]

Single spot, Rf = 0.12

Infrared absorption spectrum (KBr) $cm^{-1}$:

3450, 2930, 2860, 1650, 1560, 1470, 1255, 1230, 1140, 1095, 1080, 1020, 1005, 920, 840, 760

Elemental analysis

Calcd. for $C_{18}H_{40}NO_5P$:

C, 56.67; H, 10.57; N, 3.67; P, 8.12

Found:

C, 56.67; H, 10.30; N, 3.82; P, 8.19

Production Example 6

2-Octadecyloxyethyl 2-aminoethyl phosphate

In benzene was dissolved 1.8 g of octadecyloxyethanol and 2.24 g of 2-phthalimidoethyl phosphorodichloridate, and following addition of 0.88 g of pyridine, the mixture was stirred at room temperature for 2 hours. This reaction mixture was treated by the procedure of Production Example 5 to give a colourless powder (1.7 g).

TLC [silica gel, $CHCl_3$-MeOH-$H_2O$ (65:25:4)]
Single spot, Rf = 0.12
Infrared absorption spectrum (KBr) $cm^{-1}$:
3400, 2900, 2850, 1630, 1550, 1460, 1250, 1220, 1150, 1075, 1010, 910, 830, 750
Elemental analysis
Calcd. for $C_{22}H_{48}NO_5P \cdot 0.3H_2O$:
C, 59.64; H, 11.06; N, 3.16; P, 6.99
Found:
C, 59.66; H, 10.97; N, 3.36; P, 7.19

Production Example 7

2-Pentadecyloxyethyl 2-trimethylammonioethyl phosphate

In benzene were dissolved 5.0 g of 2-pentadecyloxyethanol and 7.1 g of 2-bromoethyl phosphorodichloridate, and following dropwise addition of 2.3 g of pyridine under ice-cooling, the mixture was stirred at room temperature. The benzene was distilled off and water was added. The mixture was refluxed, cooled, extracted with ether, and concentrated to dryness. The residue was dissolved in 20% trimethylamine-toluene and heated in a sealed tube at 60°C. After completion of the reaction, the solvent was replaced with methanol, 6.6 g of silver carbonate was added, and the mixture was refluxed for 1.5 hours. The hot mixture was filtered and the filtrate was concentrated to dryness to give a crude product. It was purified by silica gel column chromatography and recrystallized from chloroform-acetone to give 2.37 g (30%) of the desired product.

Elemental analysis
Calcd. for $C_{22}H_{48}NO_5P \cdot 0.5H_2O$:
C, 59.17; H, 11.06; N, 3.14
Found:
C, 59.27; H, 12.37; N, 3.22

Production Example 8

2-Pentadecyloxyethyl 2-pyridinioethyl phosphate

In benzene were dissolved 4.4 g of 2-pentadecyloxyethanol and 5.7 g of 2-bromoethyl phosphorodichloridate, and following dropwise addition of 1.86 g of pyridine under ice cooling, the mixture was stirred at room temperature. The benzene was distilled off and water was added. The mixture was refluxed, cooled, extracted with ether, and concentrated to dryness. The residue was dissolved in pyridine, refluxed, stirred, and then concentrated to dryness. Methanol and then 5.3 g of silver carbonate were added to the residue and the mixture was refluxed. The hot mixture was filtered and the filtrate was concentrated to dryness to give a crude product. It was purified by silica gel column chromatography and recrystallized from chloroform-acetone to give 3.41 g (57%) of the desired product.

Elemental analysis
Calcd. for $C_{24}H_{46}NO_5P \cdot 0.25H_2O$:
C, 62.11; H, 10.10; N, 3.02
Found:
C, 62.03; H, 10.06; N, 3.13

Production Example 9

2-Tetradecyloxyethyl 2-pyridinioethyl phosphate

In benzene were dissolved 5.1 g of 2-tetradecyloxyethanol and 7.6 g of 2-bromoethyl phosphorodichloridate, and following dropwise addition of 2.5 g of pyridine, the mixture was stirred at room temperature for 3 hours. The solvent was then distilled off and water was added. The mixture was refluxed, cooled, extracted with ether and concentrated to dryness. To the residue was added pyridine, and the solution was refluxed, stirred at room temperature and concentrated to dryness. Methanol and then 7.06 g of silver carbonate were added to the residue and the mixture was refluxed. The hot mixture was filtered and the filtrate was concentrated to dryness to give a crude product. It was purified by silica gel column chromatography and recrystallized from chloroform-acetone to give 4.3 g (49%) of the desired product.

NMR ($CDCl_3$) δ:
0.87 (3H), 1.23 (24H), 3.26—4.56 (8H), 4.91—5.17 (2H), 8.10—8.63 (3H), 9.56 (2H, J = 6.0Hz)
Elemental analysis
Calcd. for $C_{23}H_{42}NO_5P \cdot 0.5H_2O$:
C, 61.04; H, 9.58; N, 3.10; P, 6.84
Found:
C, 60.92; H, 9.85; N, 3.11; P, 6.63

Production Example 10

2-Octadecyloxyethyl 2-pyridinioethyl phosphate

2.73 g of 2-octadecyloxyethanol and 3.16 g of 2-bromoethylphosphorodichloridate were reacted and purified by the procedure of Production Example 5 to give 840 mg (19.3%) of colorless powder.

Elemental analysis

Calcd. for $C_{27}H_{50}NO_5P$:

C, 64.90; H, 10.09; N, 2.80; P, 6.20

Found:

C, 65.03; H, 10.19; N, 3.07; P, 5.74

Infrared absorption spectrum (KBr) $cm^{-1}$:

2910, 2850, 1220, 1090

NMR ($CDCl_3$) δ:

0.88 (3H), 1.27 (32H), 3.27—4.07 (6H), 4.33 (2H), 4.97 (2H), 8.03 (2H), 8.43 (1H), 9.28 (2H)

### Production Example 11

2-Tetradecyloxyethyl 2-[N,N-dimethyl-N-(3-methoxycarbonylpropyl)]ammonioethyl phosphate

6.23 g of 2-tetradecyloxyethyl 2-bromoethylphosphate was dissolved in 10.09 g of methyl γ-dimethylamino-n-butyrate and reacted for 17 hours at 70°C while stirring. After cooling, the solution was diluted with methanol, added 3.85 g of silver carbonate and stirred vigorously for 1 hour at room temperature. Insolubles were filtered off and the filtrate was concentrated to dryness under reduced pressure. The resulting residue was purified by silica gel column chromatography to give 4.49 g (63.3%) of desired product.

Elemental analysis

Calcd. for $C_{25}H_{52}NO_7P \cdot 1.6H_2O$:

C, 55.76; H, 10.33; N, 2.60

Found:

C, 55.75; H, 10.11; N, 2.85

Infrared absorption spectrum (film) $cm^{-1}$:

3380, 2920, 2850, 1735, 1640, 1460, 1220, 1075, 950

NMR ($CDCl_3$) δ:

0.93 (3H), 1.25 (24H), 2.00—2.33 (2H), 3.30 (3H), 3.43 (3H), 3.67 (3H), 3.16—3.93 (8H), 4.10—4.50 (4H)

### Production Example 12

2-Tetradecyloxyethyl 2-[N-(3-carboxypropyl)-N,N-dimethyl]ammonioethyl phosphate

2.85 g of the ester compound obtained by Production Example 11 was dissolved in 57 ml of ethanol and treated with 2.16 g of 28% sodium methylate-methanol solution for 18 hours at room temperature while stirring. The solution was neutralized with 0.4 N hydrogen chloride-methanol solution, diluted with the same volume of methylenechloride and then the insolubles were filtered off. The filtrate was concentrated to dryness under reduced pressure and the resulting residue was purified by silica gel column chromatography to give 2.0 g (72%) of desired products.

Elemental analysis

Calcd. for $C_{24}H_{50}NO_7P$:

C, 58.16; H, 10.17; N, 2.83

Found:

C, 58.01; H, 10.11; N, 2.89

Infrared absorption spectrum (KBr) $cm^{-1}$:

3430, 2960, 2930, 2850, 1705, 1502, 1475, 1265, 1230, 1215, 1100, 1080, 1055, 958, 870, 830, 780

NMR ($CD_3OD/CDCl_3$) δ:

0.93 (3H), 1.29 (24H), 1.86—2.22 (2H), 2.26—2.70 (2H), 3.20 (6H), 3.43—3.80 (6H), 3.83—4.20 (4H), 4.20—4.53 (2H)

### Production Example 13

2-Octadecyloxyethyl 2-trimethylammonioethyl phosphate

The desired product was obtained by the same manner as Production Example 3 as colorless needles.

Infrared absorption spectrum (KBr) $cm^{-1}$:

2920, 2850, 1460, 1220, 1080

Elemental analysis

Calcd. for $C_{25}H_{54}NO_4P \cdot 1.5H_2O$:

C, 59.26; H, 11.34; N, 2.76; P, 6.11

Found:

C, 59.11; H, 11.52; N, 2.89; P, 6.25

### Test Example 1

The cell proliferation inhibitory activity ($GD_{50}$) and differentiation inducing activity of the compound of this invention against human promyelocytic leukemia cell HL—60 are shown in Table 1. The assays were performed by the method described for example in R. Gallo et al, Blood. vol. 54, No. 3, 713 (1979).

TABLE 1

Effect on human promyelocytic leukemia cells HL—60

| Test compound (Production Example No.) | Cell proliferation inhibitory activity $GD_{50}$ (μg/ml)*1 | Differentiation (Morphology)*2 |
|---|---|---|
| 1 | 3.8 | +++ |
| 6 | 3.0 | ++ |
| 7 | 1.2 | ++ |
| 8 | 3.4 | +++ |
| 9 | 4.1 | +++ |
| 10 | 1.5 | + |
| 11 | 2.5 | + |
| 12 | 1.5 | + |

*1: 5 days' culture

*2: Activity at the compound concentration of 6 μg/ml

Test Example 2

The antiprotozoal and antimycotic activities of the compound of this invention are given in Table 2 and 3, respectively.

The antiprotozoal activity values given in Table 2 were assayed using *Tetrahymena pyriformis* W as the test organism and an assay medium composed of 20 g tryptose peptone (Difco), 1 g yeast extract, 2 g glucose, 1000 ml distilled water and 10 ml 1 M phosphate buffer, pH 7.0. Thus, the strain was incubated at 28°C for 44 to 48 hours and the minimal inhibitory concentration (MIC) of the compound (I) was determined by the broth dilution method.

The antimycotic activity values presented in Table 2 were assayed using *Cryptococcus neoformans* as the test organism. Thus, a paper disk (8 mm dia.) was dipped into an aqueous solution of the test compound (3 mg/ml), dried in the air and set in position on an agar medium. The medium was incubated at 37°C for 2 days, at the end of which time the diameter of the zone of inhibition was measured. When the diameter of the zone was not larger than 8 mm, 8—10 mm, 10—20 mm and larger than 20 mm, the activity was judged as −, ±, + and ++, respectively.

Referring to the antifungal activity values given in Table 3, a variety of typical phytopathogenic fungi were used as test organisms, and the minimal inhibitory concentration (MIC) values were determined by the serial dilution method using 1% glucose-bouillon agar medium.

TABLE 2

Antiprotozoal and antimycotic activities

| Test compounds (Example No.) | *Tetrahymena pyriformis* W MIC (μg/ml) | *Cryptococcus* Diameter of inhibition zone (mm)* |
|---|---|---|
| 1 | 0.4 | ++ |
| 2 | 0.4 | ++ |
| 3 | 0.4 | ++ |
| 4 | 0.4 | + |
| 5 | 4 | ± |
| 6 | > 4 | ± |
| 7 | ≦ 1 | + |
| 8 | 4 | + |
| 9 | 4 | ++ |
| 10 | 4 | ... |
| 11 | 4 | ... |
| 12 | 0.4 | ... |

* value at the concentration of 3 mg/ml

TABLE 3

Antifungal activity of the compound of this invention

MIC ($\mu g/ml$)

| Test phytopathogenic fungus | Test compound (Example No.) | | | | |
|---|---|---|---|---|---|
| | 1 | 2 | 3 | 4 | 5 |
| (1) *Pyricularia oryzae* (rice blast) | 3.12 | 6.25 | 1.56 | 12.5 | 25 |
| (2) *Helminthosporium oryzae* (rice Helminthosporium leaf spot) | 12.5 | 6.25 | 6.25 | 12.5 | > 100 |
| (3) *Botrytis cinerea* (gray mold) | 12.5 | 12.5 | 3.12 | 25 | 50 |
| (4) *Helminthosporium sigmoideum* (rice stem rot) | 3.12 | 6.25 | 6.25 | 25 | > 100 |
| (5) *Sclerotinia sclerotiorum* (kidney bean stem rot) | 50 | 12.5 | 100 | 100 | 100 |
| (6) *Colletotrichum lagenarium* (cucumber anthracnose) | 3.12 | 3.12 | 6.25 | 6.25 | 25 |
| (7) *Aspergillus niger* (black mold) | 12.5 | 12.5 | 25 | 25 | 25 |
| (8) *Penicillium niger* (blue mold) | 12.5 | 25 | 50 | 25 | 50 |
| (9) *Saccharomyces cerevisiae* (brewer's yeast) | < 3.12 | 6.25 | 12.5 | 25 | 25 |

Test Example 3

Test for antitumor activity of 2-octadecyloxy 2-pyridinioethyl phosphate (Production Example 10)

1. Antitumor activity against sarcoma 180

A group of five ICR mice was administered with 500 µg/mouse of the test compound dissolved in physiological saline. On the fourth day from the administration, $1 \times 10^5$ cells of sarcoma 180 per mouse were transplanted introperitonally. Average survival period of the test group was 29.8 days, while that of the control group (five mice) was 9.6 days. The survival rates of the test group against the control group T/C reached 310%.

2. Antitumor activity against MM46 mammarian carcinoma

MM46 mammarian carcinoma cells ($1 \times 10^5$) was transplanted intraperitoneally to each of five $C_3H/He$ mice group. From five days to two days before the transplantation and from two days to five days after the transplantation, eight days in total. 250 µg/mouse/day of the test compound was administered to the test group, once daily. Survival period of three of the test group was not less than 60 days, and that of the remaining two was 23 days in average. On the other hand, the average survival period of mice of the control group was 14.2 days.

3. Activation of macrophage

300 µg/mouse of the test compound was administered to a group of the test animals (five ICR mice) intraperitoneally. Four days later, the peritoneal cells were collected, and the numbers of the total cells and

adsorbed cells were measured. Both the numbers were observed about five times as much as those of the control group.

Macrophage of a determined number of cells was collected, which was suspended in Hanks' solution. Activated oxygen generated by PMA-stimulation was determined to reveal that the amount of activated oxygen from the test group was about three times as much as that from the control group. This means that the test compound serves to increase and activate macrophage in living body.

Dosage Form Example 1

Injectable preparation: 2-tetradecyloxyethyl 2-trimethylammonioethyl phosphate (80 g) is dissolved in 1 liter of distilled water, the solution is passed through a sterilization filter, poured into 1,000 vials (1 ml per vial) and lyophilized, and the vials are tightly stoppered.

Separately, a solution containing xylitol or mannitol (100 g in 2 liters) in distilled water for injection is poured into 1,000 ampules for injectable solution (2 ml per ampule) in an aseptic manner, and the ampules are sealed by fusing.

For administration, the powder in one vial is dissolved in the above-mentioned xylitol (or mannitol) solution in one ampule.

Dosage Form Example 2

Tablets, each weighing 370 mg and having a diameter tablets of 9.5 mm, are prepared in a conventional manner by mixing the ingredients:

| | |
|---|---|
| (1) Octadecyloxyethyl 2-aminoethyl phosphate | 100 mg per tablet |
| (2) Lactose | 200 mg per tablet |
| (3) Corn starch | 51 mg per tablet |
| (4) Hydroxypropylcellulose | 9 mg per tablet |

followed by granulation, addition of corn starch (8 mg per tablet) and magnesium stearate (2 mg per tablet) and tabletting.

Dosage Form Example 3

Tablets containing 2-tetradecyloxyethyl 2-pyridinioethyl phosphate are prepared in the same manner as in Dosage Form Example 2, and coated with a solution of hydropropylmethylcellulose phthalate (14 mg per tablet) and castor oil (1 mg per tablet) in an acetone-ethanol (4:6) mixture, the concentration of the solutes being 7%. Thus are obtained enteric coated tablets.

**Claims**

1. A compound of the formula (I), inclusive of its salts with hydrochloric, hydrobromic or hydroiodic acid, or with alkali metal or alkaline earth metal hydroxide for use in inhibiting multiplication of tumor cells and prolonging the survival time of a tumor-bearing warm-blooded animal:

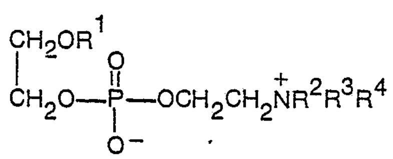

(I)

wherein $R^1$ is $C_{8-26}$ alkyl or $C_{8-26}$ alkenyl, each of said groups being unsubstituted or substituted by oxo, $C_{3-7}$ cycloalkyl or phenyl or $R^1$ is 12-(2,3-cyclopentenyl)-dodecyl, 12-(2,3-cyclopentenyl)-5-dodecenyl, 3,7-dimethyl-9-(2,6,6-trimethyl-1-cyclohexen-1-yl)-2,4,6,8-nonatetraenyl, 15-(4-n-butylphenoxy)pentadecyl, ω-(p-tolyl)heptadecyl or 6-(4-n-pentylphenoxy)hexadecyl, and $R^2$, $R^3$ and $R^4$ are each hydrogen or $C_{1-5}$ alkyl which is unsubstituted or substituted by hydroxycarbonyl, $C_{1-3}$ alkoxycarbonyl, hydroxy, cyano or $C_{1-3}$ alkoxy, or $-\overset{+}{N}R^2R^3R^4$ represents pyridinio, oxazolio, thiazolio, pyridazinio, quinolinio or isoquinolinio, each of said groups being unsubstituted or substituted by $C_{1-4}$ alkyl, hydroxy, hydroxyethyl, carbamoyl or ureido, or represents $\overset{+}{N}-C_{1-4}$alkyl-morpholinio or $\overset{+}{N}-C_{1-4}$alkyl-piperazinio.

2. A compound according to Claim 1 for the stated use, wherein $R^1$ is $C_{10-20}$ alkyl, $C_{10-20}$ alkenyl or ω-(p-tolyl) heptadecyl.

3. A compound according to Claim 1 for the stated use, wherein $\overset{+}{N}R^2R^3R^4$ represents pyridinio, oxazolio, thiazolio, pyridazinio, quinolinio or isoquinolinio.

4. A compound according to Claim 1 for the stated use, wherein $R^1$ is $C_{10-15}$ alkyl or $C_{10-15}$ alkenyl and $R^2$, $R^3$ and $R^4$ are each hydrogen or $C_{1-5}$ alkyl which is unsubstituted or substituted by hydroxycarbonyl, $C_{1-3}$ alkoxycarbonyl, hydroxyl, cyano or $C_{1-3}$ alkoxy.

5. A compound for the use according to any of Claims 1 to 4, wherein said compound is suitable for administration by injection at a dose level of 0.1 to 100 mg per kilogram body weight daily.

6. A compound, inclusive of its salts with hydrochloric or hydrobromic, hydroiodic acid, or with alkali metal or alkaline earth metal hydroxide of the formula (I′):

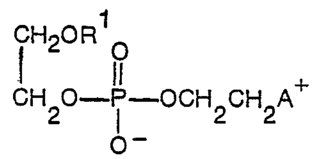

(I′)

wherein $R^1$ is $C_{8-26}$ alkyl or $C_{8-26}$ alkenyl, each of said groups being unsubstituted or substituted by oxo, $C_{3-7}$ cycloalkyl or phenyl, or $R^1$ is 12-(2,3-cyclopentenyl)dodecyl, 12-(2,3-cyclopentenyl)-5-dodecenyl, 3,7-dimethyl-9-(2,6,6-trimethyl-1-cyclohexene-1-yl)-2,4,6,8-nonatetraenyl, 15-(4-n-butylphenoxy)pentadecyl, ω-(p-tolyl)heptadecyl or 6-(4-n-pentylphenoxy)hexadecyl, and $A^+$ represents pyridinio, oxazolio, thiazolio, pyridazinio, quinolinio or isoquinolinio each of said groups being unsubstituted or substituted by $C_{1-4}$alkyl, hydroxy, hydroxyethyl, carbamoyl or ureido or represents $\overset{+}{N}$—$C_{1-4}$alkyl-morpholinio or $\overset{+}{N}$—$C_{1-4}$alkyl-piperazinio.

7. A compound according to Claim 6, wherein $R^1$ is $C_{10-20}$ alkyl or $C_{10-20}$ alkenyl.

8. A compound according to Claim 6, wherein $A^+$ is pyridinio, oxazolio, thiazolio, pyridazinio, quinolinio or isoquinolinio.

9. The compound according to Claim 6, which is 2-octadecyloxyethyl 2-pyridinioethyl phosphate.

10. A compound, inclusive of its salts with hydrochloride, hydrobromide, hydroiodide, an alkali metal or alkaline earth metal hydroxide of the formula (I″):

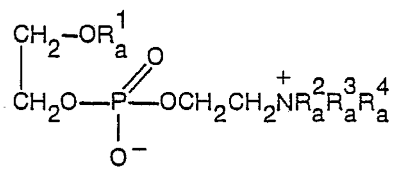

(I″)

wherein $R_a^1$ is $C_{10-15}$ alkyl or $C_{10-15}$ alkenyl, each of said groups being unsubstituted or substituted by oxo, $C_{3-7}$ cycloalkyl or phenyl, and $R_a^2$, $R_a^3$ and $R_a^4$ are each hydrogen or $C_{1-5}$ alkyl, which may be unsubstituted or substituted by hydroxycarbonyl, $C_{1-3}$ alkylcarbonyl, hydroxy, cyano or $C_{1-3}$ alkoxy.

11. A compound according to Claim 10, wherein $R_a^1$ is $C_{10-15}$ alkyl.

12. A compound according to Claim 10, wherein $R_a^2$, $R_a^3$ and $R_a^4$ are each unsubstituted $C_{1-5}$ alkyl.

13. A compound according to Claim 10, wherein $R_a^2$ is $C_{1-5}$ alkyl which is substituted with $C_{1-3}$ alkoxy- or hydroxycarbonyl, and $R_a^3$ and $R_a^4$ are each unsubstituted $C_{1-5}$ alkyl.

14. The compound according to Claim 10, which is 2-tetradecyloxyethyl 2-trimethylammonioethyl phosphate.

15. The compound according to Claim 10, which is 2-tetradecyloxyethyl 2-[N,N-dimethyl-N-(3-methoxycarbonylpropyl)]ammonioethyl phosphate.

16. A pharmaceutical composition for inhibiting multiplication of tumor cells and prolonging the survival time of tumor-bearing warm-blooded animal, which contains an effective amount of a compound (I), inclusive of salts thereof, as defined in any one of claims 1 to 4 and 6 to 15, and a pharmaceutically acceptable carrier, vehicle or diluent therefor.

17. A process for producing a compound (I′) or (I″), inclusive of salts thereof, as defined in any one of Claims 6 to 15, characterized by:

(a) reacting a compound of the formula (V):

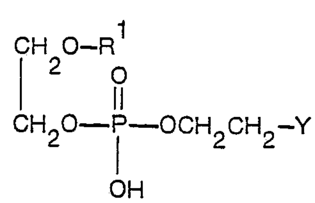

(V)

wherein $R^1$ is as defined in Claim 6, and Y is halogen, with a compound of the formula (A):

A

wherein A is as defined in Claim 6, or with a compound of the formula:

$NR_a^2R_a^3R_a^4$

wherein $R_a^2$, $R_a^3$ and $R_a^4$ are as defined in Claim 10, and, if necessary, the reaction is followed by treatment with water; or

(b) reacting a compound of the formula (VII):

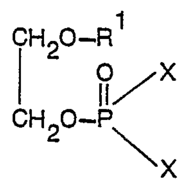

(VII)

wherein $R^1$ is as defined above and X is halogen, with a compound of the formula (X):

$HOCH_2CH_2A'^{+}\quad X^{-}$ (X)

wherein A′ is pyridinio, oxazolio, thiazolio, pyridazinio, quinolinio or isoquinolinio each of said groups being unsubstituted or substituted by $C_{1-4}$ alkyl, carbamoyl or ureido and $X^-$ is an anion of Cl, Br or I, or with a compound of the formula (XI):

$$HOCH_2CH_2\overset{+}{N}R_a^2R_a^3R_a^4\ X^-$$

wherein $R_a^2$, $R_a^3$ and $R^4$ and $X^-$ are as defined above, or, with a compound of the formula (VIII):

$HOCH_2CH_2NR'R''$ (VIII)

wherein one of R′ and R″ is $R_a^2$ and another is $-COOCH_2C_6H_5$, $-COOC_6H_5$, $-CHO$, $-COCF_3$, $-COCH_2C_6H_5$, $-SiMe_3$ or $-C(C_6H_5)_3$, or R′ and R″ are cyclized with the adjacent N atom to form succinimido or phthalimido, the reaction being followed by treatment with water and removal of the protective groups;

(c) reacting a compound of the formula (XII):

$CH_2O{-}R_a^1$
|
$CH_2OH$ (XII)

wherein $R_a^1$ is as defined in Claim 10, with a compound of the formula (III′):

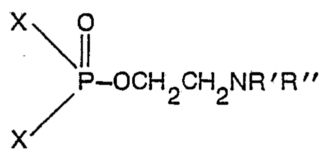

(III′)

wherein X, R′ and R″ are as defined above, and, if necessary, the reaction is followed by treatment with water, and

(d) if desired, converting the resulting compound into a salt thereof by the addition of the corresponding acid or hydroxide.

**Patentansprüche**

1. Verbindung der Formel (I), einschließlich ihrer Salze mit Salzsäure, Bromwasserstoffsäure oder Iodwasserstoffsäure oder mit Alkalimetall- oder Erdalkalimetallhydroxid zur Verwendung bei der Hemmung der Vermehrung von Tumor-Zellen und der Verlängerung der Überlebensdauer eines tumor-tragenden warmblütigen Tieres

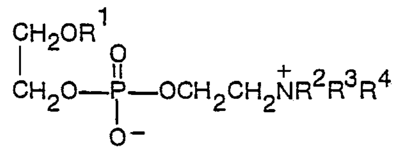
(I),

in der $R^1$ $C_{8-26}$-Alkyl oder $C_{8-26}$-Alkenyl ist, wobei jede dieser Gruppen unsubstituiert oder durch Oxo, $C_{3-7}$-Cycloalkyl oder Phenyl substituiert ist, oder $R^1$ 12-(2,3-Cyclopentenyl)-dodecyl, 12-(2,3-Cyclopentenyl)-5-dodecenyl, 3,7-Dimethyl-9-(2,6,6-trimethyl-1-cyclohexen-1-yl)-2,4,6,8-nonatetraenyl, 15-(4-n-Butylphenoxy)pentadecyl, ω-(p-Tolyl)heptadecyl oder 6-(4-n-Pentylphenoxy)hexadecyl ist und $R^2$, $R^3$ und $R^4$ jeweils Wasserstoff oder $C_{1-5}$-Alkyl ist, das unsubstituiert oder durch Hydroxycarbonyl, $C_{1-3}$-Alkoxycarbonyl, Hydroxy, Cyano oder $C_{1-3}$-Alkoxy substituiert ist, oder — $\overset{+}{N}R^2R^3R^4$ Pyridinio, Oxazolio, Thiazolio, Pyridazinio, Chinolinio oder Isochinolinio bezeichnet, wobei jede dieser Gruppen unsubstituiert oder durch $C_{1-4}$-Alkyl, Hydroxy, Hydroxyethyl, Carbamoyl oder Ureido substituiert ist, oder $\overset{+}{N}—C_{1-4}$-Alkylmorpholinio oder $\overset{+}{N}—C_{1-4}$-Alkylpiperazinio bezeichnet.

2. Verbindung nach Anspruch 1 zur angegebenen Verwendung, dadurch gekennzeichnet, daß $R^1$ $C_{10-20}$-Alkyl, $C_{10-20}$-Alkenyl oder ω-(p-Tolyl)heptadecyl ist.

3. Verbindung nach Anspruch 1 zur angegebenen Verwendung, dadurch gekennzeichnet, daß $\overset{+}{N}R^2R^3R^4$ Pyridinio, Oxazolio, Thiazolio, Pyridazinio, Chinolinio oder Isochinolinio bezeichnet.

4. Verbindung nach Anspruch 1 zur angegebenen Verwendung, dadurch gekennzeichnet, daß $R^1$ $C_{10-15}$-Alkyl oder $C_{10-15}$-Alkenyl ist und $R^2$, $R^3$ und $R^4$ jeweils Wasserstoff oder $C_{1-5}$-Alkyl ist, das unsubstituiert oder durch Hydroxycarbonyl, $C_{1-3}$-Alkoxycarbonyl, Hydroxyl, Cyano oder $C_{1-3}$-Alkoxy substituiert ist.

5. Verbindung zur Verwendung nach irgendeinem der Ansprüche 1 bis 4, dadurch gekennzeichnet, daß die Verbindung zur Verabreichung durch Injektion in einer täglichen Dosierung von 0,1 bis 100 mg pro kg Körpergewicht geeignet ist.

6. Verbindung, einschließlich ihrer Salze mit Salzsäure, Bromwasserstoffsäure oder Iodwasserstoffsäure oder mit einem Alkalimetall- oder Erdalkalimetallhydroxid der Formel (I')

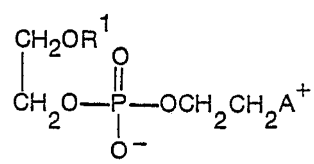
(I'),

in der $R^1$ $C_{8-26}$-Alkyl oder $C_{8-26}$-Alkenyl ist, wobei jede dieser Gruppen unsubstituiert oder durch Oxo, $C_{3-7}$-Cycloalkyl oder Phenyl substituiert ist, oder $R^1$ 12-(2,3-Cyclopentenyl)dodecyl, 12-(2,3-Cyclopentenyl)-5-dodecenyl, 3,7-Dimethyl-9-(2,6,6-trimethyl-1-cyclohexen-1-yl)-2,4,6,8-nonatetraenyl, 15-(4-n-Butylphenoxy)pentadecyl, ω-(p-Tolyl)heptadecyl oder 6-(4-n-Pentylphenoxy)hexadecyl ist und $A^+$ Pyridinio, Oxazolio, Thiazolio, Pyridazinio, Chinolinio oder Isochinolinio bezeichnet, wobei jede dieser Gruppen unsubstituiert oder durch $C_{1-4}$-Alkyl, Hydroxy, Hydroxyethyl, Carbamoyl oder Ureido substituiert ist, oder $\overset{+}{N}—C_{1-4}$-Alkylmorpholinio oder $\overset{+}{N}—C_{1-4}$-Alkylpiperazinio bezeichnet.

7. Verbindung nach Anspruch 6, dadurch gekennzeichnet, daß $R^1$ $C_{10-20}$-Alkyl oder $C_{10-20}$-Alkenyl ist.

8. Verbindung nach Anspruch 6, dadurch gekennzeichnet, daß $A^+$ Pyridinio, Oxazolio, Thiazolio, Pyridazinio, Chinolinio oder Isochinolinio ist.

9. Verbindung nach Anspruch 6, die 2-Octadecyloxyethyl 2-pyridinioethylphosphat ist.

10. Verbindung, einschließlich ihrer Salze mit Hydrochlorid, Hydrobromid, Hydroiodid, einem Alkalimetall- oder Erdalkalimetallhydroxid der Formel (I'')

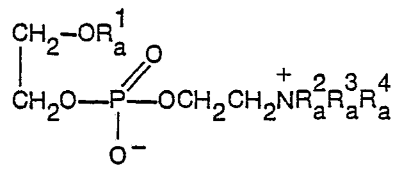

(I''),

in der $R_a^1$ $C_{10-15}$-Alkyl oder $C_{10-15}$-Alkenyl ist, wobei jede dieser Gruppen unsubstituiert oder durch Oxo, $C_{3-7}$-Cycloalkyl oder Phenyl substituiert ist, und $R_a^2$, $R_a^3$ und $R_a^4$ jeweils Wasserstoff oder $C_{1-5}$-Alkyl sind, die unsubstituiert oder durch Hydroxycarbonyl, $C_{1-3}$-Alkoxycarbonyl, Hydroxy, Cyano oder $C_{1-3}$-Alkoxy substituiert sein können.

11. Verbindung nach Anspruch 10, dadurch gekennzeichnet, daß $R_a^1$ $C_{10-15}$-Alkyl ist.

12. Verbindung nach Anspruch 10, dadurch gekennzeichnet, daß $R_a^2$, $R_a^3$ und $R_a^4$ jeweils unsubstituiertes $C_{1-5}$-Alkyl sind.

13. Verbindung nach Anspruch 10, dadurch gekennzeichnet, daß $R_a^2$ $C_{1-5}$-Alkyl ist, das durch $C_{1-3}$-Alkoxy oder Hydroxycarbonyl substituiert ist, und $R_a^3$ und $R_a^4$ jeweils unsubstituiertes $C_{1-5}$-Alkyl sind.

14. Verbindung nach Anspruch 10, die 2-Tetradecyloxyethyl-2-trimethylammonioethylphosphat ist.

15. Verbindung nach Anspruch 10, die 2-Tetradecyloxyethyl-2-[N,N-dimethyl-N-(3-methoxycarbonylpropyl)]ammonioethylphosphat ist.

16. Pharmazeutische Zusammensetzung zur Hemmung der Vermehrung von Tumor-Zellen und der Verlängerung der Überlebensdauer eines tumor-tragenden warmblütigen Tieres, enthaltende eine wirksame Menge einer Verbindung (I), einschließlich ihrer Salze, nach irgendeinem der Ansprüche 1 bis 4 und 6 bis 15 und ein pharmazeutisch unbedenkliches Trägermaterial, Streckmittel oder Verdünnungsmittel dafür.

17. Verfahren zur Herstellung einer Verbindung (I') oder (I''), einschließlich ihrer Salze, nach irgendeinem der Ansprüche 6 bis 15, dadurch gekennzeichnet, daß

(a) eine Verbindung der Formel (V)

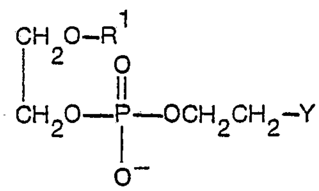

(V),

in der $R^1$ die in Anspruch 6 angegebene Bedeutung hat und Y Halogen ist, mit einer Verbindung der Formel A, in der A die in Anspruch 6 angegebene Bedeutung hat, oder mit einer Verbindung der Formel

$$NR_a^2R_a^3R_a^4,$$

in der $R_a^2$, $R_a^3$ und $R_a^4$ die in Anspruch 10 angegebenen Bedeutungen haben, umgesetzt wird und erforderlichenfalls auf die Reaktion eine Behandlung mit Wasser folgt, oder

(b) eine Verbindung der Formel (VII)

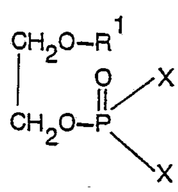

(VII),

in der $R^1$ die im Vorstehenden angegebene Bedeutung hat und X Halogen ist, mit einer Verbindung der Formel (X)

$$HOCH_2CH_2A'^{+}\quad X^- \qquad (X),$$

in der A' Pyridinio, Oxazolio, Thiazolio, Pyridazinio, Chinolinio oder Isochinolinio ist, wobei jede dieser Gruppen unsubstituiert oder durch $C_{1-4}$-Alkyl, Carbamoyl oder Ureido substituiert ist, und $X^-$ ein Anion von Chlor, Brom oder Iod ist, oder mit einer Verbindung der Formel (XI):

$$HOCH_2CH_2\overset{+}{N}R_a^2R_a^3R_a^4 \quad X^-,$$

in der $R_a^2$, $R_a^3$, $R_a^4$ und $X^-$ die im Vorstehenden angegebenen Bedeutungen haben, oder mit einer Verbindung der Formel (VIII)

$$HOCH_2CH_2NR'R'' \qquad (VIII),$$

in der einer der Substituenten R' und R'' $R_a^2$ ist und der andere $-COOCH_2C_6H_5$, $-COOC_6H_5$, —CHO, $-COCF_3$, $-COCH_2C_6H_5$, —SiMe₃ oder $-C(C_6H_5)_3$ ist oder R' und R'' mit dem benachbarten Stickstoff-Atom cyclisiert sind und Succinimido oder Phthalimido bilden, umgesetzt wird und auf die Reaktion eine Behandlung mit Wasser und die Entfernung der Schutzgruppe erfolgen,

(c) eine Verbindung der Formel (XII)

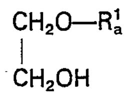

(XII),

in der $R_a^1$ die in Anspruch 10 angegebene Bedeutung hat, mit einer Verbindung der Formel (III')

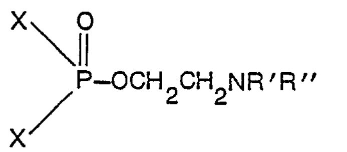

(III'),

in der X, R' und R'' die im Vorstehenden angegebenen Bedeutungen haben, umgesetzt wird und erforderlichenfalls auf die Reaktion eine Behandlung mit Wasser folgt und

(d) gewünschtenfalls die erhaltene Verbindung durch Addition der entsprechenden Säure oder des entsprechenden Hydroxids in ein Salz derselben überführt wird.

**Revendications**

1. Composé de formule (I), ainsi que ses sels avec l'acide chlorhydrique, bromhydrique ou iodhydrique ou avec un hydroxyde de métal alcalin ou de métal alcalin-terreux, destiné à être utilisé pour réprimer la prolifération de cellules tumorales et prolonger la durée de vie d'un animal à sang chaud porteur d'une tumeur:

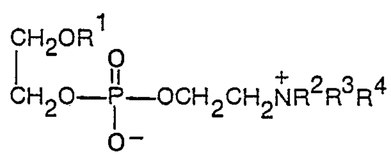

(I)

dans laquelle $R^1$ représente un alcoyle en $C_{8-26}$ ou alcényle en $C_{8-26}$, chacun desdits groupes étant non substitué ou substitué par un oxo, un cycloalcoyle en $C_{3-7}$ ou un phényle, ou $R^1$ représente le 12-(2,3-cyclopentényl)-dodécyle, 12-(2,3-cyclopenténlyl)-5-dodécényle, 3,7-diméthyl-9-(2,6,6-triméthyl-1-cyclohexène-1-yl)-2,4,6,8-nonatétraényle, 15-(4-n-butylphénoxy)pentadécyle, ω-(p-tolyl)heptadécyle or 6-(4-n-pentylphénoxy)hexadécyle, et $R^2$, $R^3$ et $R^4$ représentent chacun l'hydrogène ou un alcoyle en $C_{1-5}$ qui est non substitué ou substitué par un hydroxycarbonyle, un $C_{1-3}$- alcoxycarbonyle, un hydroxy, un cyano ou un alcoxy en $C_{1-3}$, ou

$-\overset{+}{N}R^2R^3R^4$ représente un groupe pyridinio, oxazolio, thiazolio, pyridazinio, quinoléinio ou isoquinoléinio, chacun desdits groupes étant non substitué ou substitué par un alcoyle en $C_{1-4}$, un hydroxy, un hydroxyéthyle, un carbamoyle ou un groupe uréido, ou représente un groupe $\overset{+}{N}-C_{1-4}$-alcoyl-morpholinio ou $\overset{+}{N}-C_{1-4}$-alcoyl-pipérazinio.

2. Composé selon la revendication 1, destiné à l'usage indiqué, dans lequel $R^1$ représente un alcoyle en $C_{10-20}$, un alcényle en $C_{10-20}$ ou le groupe ω-(p-tolyl)-heptadécyle.

3. Composé selon la revendication 1, destiné à l'usage indiqué, dans lequel $\overset{+}{N}R^2R^3R^4$ représente le groupe pyridinio, oxazolio, thiazolio, pyridazinio, quinoléinio ou isoquinoléinio.

4. Composé selon la revendication 1, destiné à l'usage indiqué, dans lequel $R^1$ représente un alcoyle en $C_{10-15}$ ou un alcényle en $C_{10-15}$ et $R^2$, $R^3$ et $R^4$ représentent chacun l'hydrogène ou un alcoyle en $C_{1-5}$ qui est non substitué ou substitué par un hydroxycarbonyle, un $C_{1-3}$-alcoxycarbonyle, un hydroxyle, un cyano ou un alcoxy en $C_{1-3}$.

5. Composé destiné à l'usage selon l'une quelconque des revendications 1 à 4, dans lequel ledit composé est propre à l'administration par injection à un niveau de dose de 0,1 à 100 mg par kg de poids corporel par jour.

6. Composé de formule (I'), ainsi que ses sels avec l'acide chlorhydrique, bromhydrique ou iodhydrique ou avec un hydroxyde de métal alcalin ou de métal alcalino-terreux:

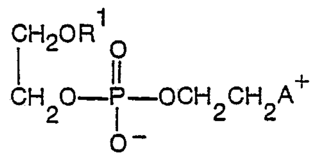

(I')

dans laquelle $R^1$ représente un alcoyle en $C_{8-26}$ ou un alcényle en $C_{8-26}$, chacun desdits groupes étant non substitué ou substitué par un oxo, un cycloalcoyle en $C_{3-7}$ ou un phényle, ou $R^1$ représente le 12-(2,3-cyclopentén yl)-dodécyle, 12-(2,3-cyclopentényl)-5-dodécényl, 3,7-diméthyl-9-(2,6,6-triméthyl-1-cyclohexène-1-yl)-2,4,6,8-nonatétraényle, 15-(4-n-butylphénoxy)pentadécyle, ω-(p-tolyl)heptadécyle ou 6-(4-n-pentylphénoxy)hexadécyle, et $A^+$ représente un groupe pyridinio, oxazolio, thiazolio, pyridazinio, quinoléinio ou isoquinoléinio, chacun desdits groupes étant non substitué ou substitué par un alcoyle en $C_{1-4}$, un hydroxy, un hydroxyéthyle, un carbamoyle ou un groupe uréido, ou représente un group $\overset{+}{N}$—$C_{1-4}$-alcoyl-morpholino ou $\overset{+}{N}$—$C_{1-4}$-alcoyl-pipérazinio.

7. Composé selon la revendication 6, dans lequel $R^1$ représente urf alcoyle en $C_{10-20}$ ou un alcényle en $C_{10-20}$.

8. Composé selon la revendication 6, dans lequel $A^+$ représente un groupe pyridinio, oxazolio, thiazolio, pyridazinio, quinoléinio ou isoquinoléinio.

9. Composé selon la revendication 6, qui est le phosphate de 2-octadécyloxyéthyl 2-pyridinioéthyle.

10. Composé de formule (I''), ainsi que ses sels avec l'acide chlorhydrique, bromhydrique ou iodhydrique ou avec un hydroxyde de métal alcalin ou alcalino-terreux:

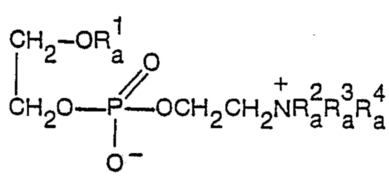

(I'')

dans laquelle $R_a^1$ représente un alcoyle en $C_{10-15}$ ou un alcényle en $C_{10-15}$, chacun desdits groupes étant non substitué ou substitué par un oxo, un cycloalcoyle en $C_{3-7}$ ou un phényle, et $R_a^2$, $R_a^3$ et $R_a^4$ représentent chacun l'hydrogène ou un alcoyle en $C_{1-5}$ qui peut être non substitué ou substitué par un hydroxycarbonyle, un $C_{1-3}$-alcoxycarbonyle, un hydroxy, un cyano ou un alcoxy en $C_{1-3}$.

11. Composé selon la revendication 10, dans lequel $R_a^1$ représente un alcoyle en $C_{10-15}$.

12. Composé selon la revendication 10, dans lequel $R_a^2$, $R_a^3$ et $R_a^4$ représentent chacun un alcoyle en $C_{1-5}$ non substitué.

13. Composé selon la revendication 10, dans lequel $R_a^2$ représente un alcoyle en $C_{1-5}$ qui est substitué par un alcoxy en $C_{1-3}$ ou un hydroxycarbonyle, et $R_a^3$ et $R_a^4$ représentent chacun un alcoyle en $C_{1-5}$ non substitué.

14. Composé selon la revendication 10, qui est le phosphate de 2-tétradécyloxyéthyl 2-triméthylammonioéthyle.

15. Composé selon la revendication 10, qui est le phosphate de 2-tétradécyloxyéthyl 2-[N,N-diméthyl-N-(3-méthoxycarbonylpropyl)]ammonioéthyle.

16. Composition pharmaceutique destinée à réprimer la prolifération des cellules tumorales et à prolonger la durée de vie d'un animal à sang chaud porteur d'une tumeur, qui contient une quantité efficace d'un composé (I), ainsi que des sels de celui-ci, tel que défini dans l'une quelconque des revendications 1 à 4 et 6 à 15, et une matière de support, un véhicule ou un diluant pharmaceutiquement acceptables.

17. Procédé de préparation d'un composé (I') ou (I''), ainsi que des sels de celui-ci, tel que défini dans l'une quelconque des revendications 6 à 15, caractérisé et en ce que:

(a) on fait réagir un composé de formule (V):

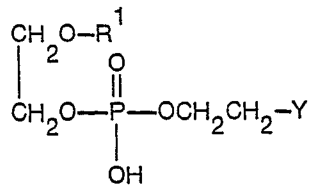

(V)

dans laquelle $R^1$ est tel que défini à la revendication 6 et Y représente un halogène, avec un composé de formule (A):

A

dans laquelle A est tel que défini à la revendication 6, ou avec un composé de formule:

$$NR_a^2R_a^3R_a^4$$

dans laquelle $R_a^2$, $R_a^3$ et $R_a^4$ sont tels que définis à la revendication 10, et, si nécessaire, on fait suivre la réaction d'un traitement à l'eau;

(b) on fait réagir un composé de formule (VII):

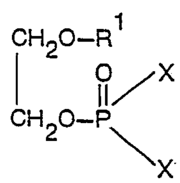

(VII)

dans laquelle $R^1$ est tel que défini ci-dessus et X représente un halogène, avec un composé de formule (X):

$$HOCH_2CH_2A'^{+} \quad X^- \qquad (X)$$

dans laquelle A' représente un groupe pyridinio, oxazolio, thiazolio, pyridazinio, quinoléinio ou isoquinoléinio, chacun desdits groupes étant non substitué ou substitué par un alcoyle en $C_{1-4}$, un carbamoyle ou un groupe uréido et $X^-$ représente un anion de chlore, de brome ou d'iode, ou avec un composé de formule (XI):

$$HOCH_2CH_2\overset{+}{N}R_a^2R_a^3R_a^4 \; X^-$$

dans laquelle $R_a^2$, $R_a^3$ et $R_a^4$ et $X^-$ sont tels que définis ci-dessus, ou avec un composé de formule (VIII):

$$HOCH_2CH_2NR'R'' \qquad (VIII)$$

dans laquelle l'un de R' et R'' est $R_a^2$ et l'autre représente —$COOCH_2C_6H_5$, —$COOC_6H_5$, —CHO, —$COCF_3$, —$COCH_2C_6H_5$, —$SiMe_3$ ou —$C(C_6H_5)_3$ ou R' et R'' sont cyclisés avec l'atome d'azote adjacent et forment un groupe succinimido ou phtalimido, la réaction étant suivie d'un traitement à l'eau et de l'élimination des groupes protecteurs,

(c) on fait réagir un composé de formule (XII):

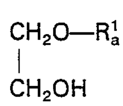

(XII)

dans laquelle $R_a^1$ est tel que défini à la revendication 10, avec un composé de formule (III'):

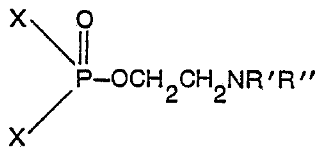 (III')

dans laquelle X, R' et R" sont tels que définis ci-dessus, et si désiré, la réaction est suivie d'un traitement à l'eau et

(d) si désiré, on transforme le composé obtenu en un sel par addition de l'acide ou de l'hydroxyde correspondant.